# EUROPEAN PATENT APPLICATION

(11) **EP 3 002 923 A1**
(43) Date of publication of application: **06.04.2016**
(21) Application number: 14460061.6
(22) Date of filing: 04.10.2014
(51) Int. Cl.: H04L 29/06

(54) **Method and system communication with the DTA-register architecture**

(71) Applicant: Nawrocki, Piotr, 88-100 Inowroclaw (PL)
(72) Inventor: Nawrocki, Piotr, 88-100 Inowroclaw (PL)
(74) Representative: Sielewiesiuk, Jakub

(57) **Abstract**

Communication system with DTA registry architecture, characterized in that it combines known technologies of the Internet, NFC, and the mechanism of product location, geotagging, with the possibility of full identification, and implementation of storage systems, and a smartphone, thus creating a mobile tool to protect the copyright and industrial rights, as well as the legality of the product.

## Description

The present invention is a method and system of communication with DTA registry architecture, on the example of the DTA registry system - the method of verifying the legality of the products, allowing the monitoring, control, and systematizing intellectual rights of artists and authors, as well as the legality of a product and the exchange of economic information.

The external borders of the European Union, EU customs seize an annual average of more than 103 million products, for which there was a suspicion of a breach of intellectual property rights. In the published report of the Commission on the enforcement of the EU customs intellectual property rights, the number of items detained by customs almost doubled compared to the previous year, for example: from 43 500 in 2009 to almost 80 000 in 2010. In 2011, for the first time in the Commission's report also stated the value of the goods detained, estimated at over 1 billion Euro. Among the most often seized goods are cigarettes (34 percent), office supplies (9 percent), other tobacco products (8 percent), labels, tags and signs (8 percent), clothing (7 percent) and toys (7 percent). 14.5 percent of the seized items are household use items, such as shampoos, soaps, medicines or small appliances (hair dryers, shavers, computer parts) that can potentially endanger the lives and health of consumers.

As highlighted in the Europe 2020 strategy, intellectual property protection is important for the EU economy and it is the driving force for further growth in areas such as research, innovation and employment. Effective enforcement of intellectual property rights is also important due to the fact that some counterfeits (such as groceries, toiletries, and articles intended for children), produced without any regulation, can pose a serious threat to the health and life of EU citizens.

Appropriate cooperation with international trading partners can also significantly help prevent exports to the EU of goods infringing intellectual property rights and the detection of such cases. In 2009 the EU and China signed an Action Plan focusing just on improving cooperation in the field of enforcement of intellectual property rights by customs authorities (see IP/09/193). Cooperation with industry also is of great importance to ensure proper identification of goods infringing intellectual property rights. Businesses may request the intervention of the customs in case of suspicion that their intellectual property rights are violated, and the information provided by industry helps customs services better target the inspections they conduct. The Commission has prepared a manual for copyright holders to help them in the submission of applications, and is in direct contact with the private sector to determine the areas in which it is possible to further improve the inspection process.

Due to the scale of counterfeiting both governmental units and the private sector extremely find it extremely hard to control the legality and origin of manufactured products.

To facilitate the above activities a registry system codenamed DTA was created, which this solution is part of.

The essence of the method and system of communication with the architecture of the DTA registry by the invention is the use and combination of known technologies including the Internet, NFC technology and the mechanism of product location, geotagging, the possibility of full identification, and implementation of storage systems, using a device such as a smartphone , creating in effect a mobile tool for copyright and industrial right protection, as well as the legality of a product.

Telecommunications and communications applications and solutions were used In the system, including: NFC (Near Field Communication) - for encrypted product identification, Bluetooth - for encrypted exchange of information, GPS (Global Positioning System) - now available in smartphones, automatic search for the location of a controlled product, S Beam - for encrypted product identification, USB - for encrypted exchange of information. A mobile phone location using GPS, available in any model of a smartphone, for possible deletion of data in case of loss or theft of a phone, login and access password and use the module or fingerprints scanning application. Identification of biometric characteristics: a photograph of the holder, a fingerprint, an eyeball scan, etc. allow official control unit, or institutions which checks are ordered to confirm the identification of the identity in the process.

For secure data transmission and application and information authentication secure encryption algorithms are used. At the time of downloading the purchased application an encryption code is programmed in it, which at the time of the product control will serve as an authenticity identifier of the read data. The system uses mechanisms with a high degree of control encryption during the whole process of data exchange between the application and the system, and during the transmission and storage of classified information. The method and the mode of mechanisms connection provide the uniqueness of the system and the control application.

In order to verify a product location, the system uses location-based services, GPS; by determining and entering the location in the system to process the data which allows for preparation of a map of distribution of the products and for other statistical purposes.

The unique application interface for control authorities is specially designed for exchange of information from the mobile application between the system and external databases.

Operation of the system according to the invention is shown in more detail in an embodiment through the operation method of verifying tool elements, in which the registry provides complete information about the products using the Internet access. In the case of product inspection it is not required to connect to the network because it also works off-line._To run the application, after downloading the application, the user must register it and then select and enter a password.

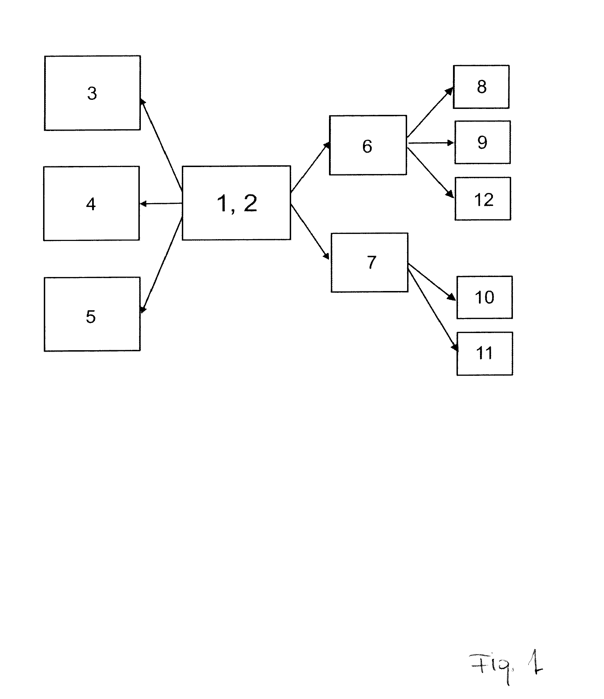

Homepage is the starting point for the application and all of its available features. It includes the following functionality: LICENSES, PROFILE, SETTING, SCAN PRODUCT. Method and system shown in more detail in Fig. 1.

When one select "LICENSE" **1** only selected/purchased version of a license/permit will be displayed here. This applies mainly to verify the powers of control authorities. Verification using the QR code allows further authenticate persons acting on behalf of the control bodies.

Homepage 2, is the starting point for the application and all of its available features.

When one select function "LICENSE" **3** only selected/purchased version of a license/permit will be displayed here. This applies mainly to verify the powers of control authorities. Verification using the QR code allows further authenticate persons acting on behalf of the control bodies.

Sequentially function "PROFILE" **4.** Displays all the profiles of the license holder. Here one can decide which profile is for access to the assigned level of access data, as a user: creator, customer, or representative of the controlling institution.

Function "SETTINGS" **5.** Here can find a changes of application, such as language selection, change of the application version, visual settings of the application and notifications. There is also an option of help for the user.

Function "CONFIRMATION" **6.** This is basic function of confirming the legality of the product and referrer to additional functions depending on the license assigned to the user. If a system marker/tag is found on a product registered in the system, the screen refers to additional functions. Depending on the license assigned to the user, the application offers the opportunity to see the certificate, or to obtain additional information. When a function is selected, the application returns to the function No **8, 9** or **12.**

Function "NOTOFICATION" **7.** After a certain time the application takes the user to function **7** and provides additional options. In case of lack of confirmation of marking on the product, suspected illegal distribution, or lack of labeling of the product due to the lack of product in the database registry, the application allows selected operations within the operation of the registry, depending on the level of user access. After clicking it refers to function **10** or **11.**

Function "CERTYFICATION" **8** presents the product certificate to the user, including details of the entity that owns the product, identification number or other registry verification data.

Function **9** presents the application options that can provide: Information about the author, searching for other products by the same author, searching for other points of distribution in the vicinity, searching additional options in the network, searching similar products. The system allows access to external applications, portals, downloading resources on the basis of authentication, etc.
Function **10** allows the user to: automatically report abuse when it is sure that the product should have been labeled (available for trusted users to avoid unverified calls), execute photographic documentation and send it to the registry to verify the legality of a product by an authorized control body, mark the place of inspection by geotagging. The visible version is a demonstrative version - the functions allowing detailing have developed identification mechanisms used by the system to verify the exact circumstances of controls of a selected product.

Function LAWS AND REGULATIONS **11** presents a set of rules and regulations regarding the protection of intellectual and material property. This information will support primarily control institutions.

Function DATA PROCESSING **12** has functions reserved for the authorized representatives of control institutions. These include: downloading additional support applications and access to authorized system resources; options for managing the work of representatives of the control institutions and information collected during the identification of markers/tags during an inspection.

Scanning the product using a mobile application that uses the built in smartphone communication solutions and confirmation the authenticity identification is done in an encrypted way at the same time during the inspection of the product.

The system will be maintained and regularly updated by the target operator, and the system includes the option to integrate with all available operating systems. There are several methods of valuation using the system, including free downloadable versions for end users. None of these options is not final, extending the functionality of the application is closely related to the scope of activities and the requirements laid down in specific cases of its operation.

## Claims

1. Communication system with DTA registry architecture, **characterized in that** it combines known technologies of the Internet, NFC, and the mechanism of product location, geotagging, with the possibility of full identification, and implementation of storage systems, and a smartphone, thus creating a mobile tool to protect the copyright and industrial rights, as well as the legality of the product.

2. Method of communication with DTA registry architecture, **characterized in that**, the application start page is the starting point for the application and all of its features available when after selecting Licenses purchased version of the license/permit is displayed, consecutively verification using the QR code authenticates a person acting on behalf of control bodies, all the profiles of the license holder are available, one can decide which profile is for access to the assigned level of access data, as a user: creator, customer, or representative of the controlling institution, application changes are available here, e.g.: selection of a language, changing the version of the application, the application visual settings and notifications, and the help option to facilitate the use of the program to the user, in case of finding label/tag by the system on the product registered in the system, the screen refers to additional functions, depending on the license assigned to the user application offers the opportunity to see the certificate, or obtain additional information, if a function is selected, the application refers to the function **8**, **9** or **12**, after a period of time an application takes the user to the function **7** and provides additional options, in case of lack of confirmation on a product, suspected illegal distribution, or lack of labeling of the product due to the lack of product in the database registry, depending on the level of user the application allows access to the selected operations within the operation of the registry, upon clicking it refers to the function **10** or **11**, function **8** presents a product certificate to the user, including details of the entity that owns the product, identification number or other data verification registry, function **9** presents the application options that can retrieve: information about the author, search for other products by the same author, search for other points of distribution in the vicinity, search additional options in the network, search similar products, the system allows access to external applications, portals, download resources on the basis authentication, the function **10** allows the user to automatically report abuse, execute photographic documentation and send it to the registry to verify the legality of a product by an authorized control body, mark the place of inspection by geotagging, function **11** presents a set of rules and regulations regarding the protection of intellectual and material property, function **12** has functions reserved for the authorized representatives of control institutions that include: downloading additional support applications and access to authorized system resources, options for managing the work of representatives of the control institutions and information collected during the identification of markers/tags during an inspection.
